# FASCICULE DE BREVET EUROPEEN

(11) **EP 2 630 444 B1**
(45) Date de publication et mention de la délivrance du brevet: **27.08.2014**
(21) Numéro de dépôt: 11785086.7
(22) Date de dépôt: 20.10.2011
(51) Int. Cl.: G01C 21/34, G01C 21/36

(54) **SYSTEME ET PROCEDE DE REPRESENTATION D'ITINERAIRE PAR SECTIONS**
SYSTEM UND VERFAHREN ZUM ANZEIGEN EINER ROUTE DURCH ABSCHNITTEN
SYSTEM AND METHOD OF REPRESENTING A ROUTE BY SECTIONS

(30) Priorité: 21.10.2010 FR 1004167
(43) Date de publication de la demande: 28.08.2013
(73) Titulaire: Michelin Travel Partner, 92100 Boulogne-Billancourt (FR)
(72) Inventeur: HAYOT, Pierre, F-63040 Clermont Ferrand cedex 9 (FR)
(74) Mandataire: Bauvir, Jacques
(86) Numéro de dépôt international: PCT/IB2011/002495
(87) Numéro de publication internationale: WO 2012/052825

(56) Documents cités:
- US-B1- 6 199 014

## Description

### DOMAINE TECHNIQUE DE L'INVENTION

La présente invention concerne un procédé et un système de génération automatique de cartes d'itinéraires. Elle concerne plus particulièrement un procédé permettant de générer des cartes d'itinéraires complètes et exhaustives, utilisant un espace mémoire restreint.

### ETAT DE LA TECHNIQUE ANTERIEURE

Les dispositifs, procédé et système de préparation de cartes d'itinéraires sont bien connus et sont même devenus des outils d'usage courant pour un nombre considérablement important d'usagers de la route.

Par exemple, le document WO2006/042688 décrit un procédé de génération d'itinéraires indiquant, en plus d'un itinéraire optimal entre deux points donnés, les points de voisinage le long de cet itinéraire. Outre la présence des points de voisinage, qui permettent de faciliter le suivi de l'itinéraire grâce au repérage de points faciles à visualiser le long du tracé, ce document décrit un mode de présentation classique des itinéraires préparés avant le départ, à savoir une impression sur une ou plusieurs pages comportant des instructions écrites, et une ou plusieurs pages comportant des cartes routières sur lesquelles l'itinéraire établi est mis en évidence, par exemple par surlignage. Bien que ce type d'outil soit utile pour la préparation d'un déplacement, en permettant au conducteur de prendre connaissance de façon globale du parcours à venir, plusieurs inconvénients sont à noter lors de la phase de suivi de l'itinéraire sur la route. Pour un conducteur ou pour un passager agissant en tant que copilote, la manipulation de plusieurs pages pour un même secteur d'itinéraire est peu pratique. Par ailleurs, la lecture et la compréhension des instructions détaillées, sans relation précise avec la carte de l'itinéraire à effectuer, peut parfois être fastidieuse. Enfin, des détails visuels précis sur les manoeuvres à effecteur sont en général absents, causant parfois des risques d'erreur dans l'interprétation des instructions. Enfin, si un tel itinéraire, avec format cartographique complet doit être traité, sauvegardé ou transmis à un dispositif portable, la capacité mémoire, la puissance et la consommation réseau requises sont relativement importantes, ce qui peut restreindre la liste des appareils compatibles. La consommation de bande passante imposée au réseau induit des coûts techniques tant du côté du dispositif qui reçoit les données que du côté du système qui procure les données. Une autre restriction provient du temps de transfert qui devient lui aussi excessif en raison des limitations techniques de débit des réseaux.

Le document FR 2 796 746 décrit un système d'affichage d'un itinéraire comportant des moyens de génération d'informations de carte de région limitée en forme d'une bande s'étendant le long d'un itinéraire. La largeur de la bande est adaptée en fonction de la capacité de mémorisation d'information du dispositif. Un tel dispositif ne permet cependant pas d'optimiser le format de la carte puisqu'il s'agit uniquement de procéder à une extraction de données en conservant le format initial. Par ailleurs, aucune explication ou instruction n'est fournie pour faciliter le suivi de cet itinéraire.

Le document US2006/0271277 décrit une carte de planification de voyage ou d'itinéraire comprenant l'affichage d'un itinéraire et d'éléments complémentaires à cet itinéraire, tel que des informations concernant les hôtels, les restaurants, les sites touristiques, etc. Ces données complémentaires sont intéressantes pour assurer l'agrément des passagers du véhicule, mais ne permettent pas de faciliter le suivi de l'itinéraire en tant que tel.

Le document US 6199014 décrit un système d'affichage d'itinéraire dans lequel l'itinéraire est découpé en sections successives qui sont représentées schématiquement.

Ainsi, de manière générale, les procédés existants sont peu ergonomiques et sont généralement gourmands en capacité mémoire.

Pour pallier ces différents inconvénients, l'invention prévoit différents moyens techniques.

### EXPOSE DE L'INVENTION

Tout d'abord, un premier objet de l'invention consiste à prévoir un procédé de génération de cartes d'itinéraires permettant de générer des cartes d'itinéraires occupant un espace mémoire réduit ou minimalisé.

Un autre objet de l'invention consiste à prévoir un procédé de génération de cartes d'itinéraires avec une ergonomie optimisée, facilitant la compréhension et l'utilisation, en toute sécurité.

Encore un autre objet de l'invention consiste à prévoir un système de génération de cartes d'itinéraires occupant une surface minimale, mais sans affecter la clarté ou la qualité générale des données contenues.

Pour ce faire, l'invention prévoit un procédé selon la revendication 1 annexée.

Le fait que l'ensemble des points d'entrée et/ou de sortie comporte une position angulaire voisine permet d'améliorer l'ergonomie de la carte d'itinéraire, en offrant un format des manoeuvres le plus standard possible. La lisibilité de la carte s'en trouve grandement améliorée. Selon un exemple avantageux de ce mode de réalisation dans lequel les points d'entrées sont dans la portion inférieure du support d'affichage (ou d'impression), ce type de mise en oeuvre permet un affichage des données en correspondance avec une vue correspondant sensiblement au cap suivi par le véhicule, c'est-à-dire une vue dans laquelle l'axe du support est sensiblement aligné avec l'axe du véhicule.

L'utilisation d'une représentation schématique utilisant quelques tronçons clés, Plutôt qu'un jeu de cartes de la zone couverte par l'itinéraire et des parties de cette zone, permet de réduire de façon considérable la capacité mémoire requise pour stocker et/ou utiliser les cartes produites. Ainsi, un plus grand nombre de dispositif sont susceptibles de pouvoir afficher les cartes générées par le procédé.

Selon une autre possibilité, la représentation schématique comporte uniquement les tronçons identifiés pour la réalisation de l'itinéraire.

L'extraction de l'itinéraire du reste des éléments cartographiques confère une liberté totale de représentation des segments, tant du point de vue dimensionnel qu'angulaire.

Selon un mode de réalisation avantageux, le secteur par rapport au support sur lequel les sections sont agencées est un secteur angulaire. Selon divers exemples de réalisation, le point d'entrée est dans le secteur entre 165 et 195 degrés, ou encore dans le secteur entre 345 et 15 degrés, ou encore est dans le secteur entre 70 et 105 degrés, ou encore dans le secteur entre 65 et 115 degrés.

Selon encore un autre mode de réalisation, le secteur par rapport au support sur lequel les sections sont agencées est un des côtés de la représentation schématique correspondante (gauche, droite, bas, haut).

Selon encore un autre mode de réalisation, les sections sont des sections unitaires, chaque section unitaire comportant un point d'entrée suivi d'un noeud correspondant à une manoeuvre à effectuer et un point de sortie.

Dans une variante, la représentation schématique comporte en plus des tronçons directement connectés à ceux de l'itinéraire prévu. Les tronçons connectés concernés sont de préférence ceux où des manoeuvres sont prévues et ceux précédant une manoeuvre de type croisement avec passage à niveau.

Selon une autre possibilité, chaque section comporte en plus une portion d'itinéraire sans manoeuvre à effectuer. Cette portion se prolonge de préférence sensiblement jusqu'à la manoeuvre suivante. Grâce au procédé selon l'invention, cette portion est dimensionnée en fonction de la surface disponible. Il n'est pas requis d'utiliser de surface supplémentaire, rendant inutilement longue la représentation de l'itinéraire.

Selon un autre example, si ces opérations ne peuvent pas être effectuées de façon préalable ou par un dispositif externe, le procédé comprend les étapes pour détecter les manoeuvres permettant d'effectuer l'itinéraire et éventuellement pour obtenir les données d'instructions correspondant aux manoeuvres à effectuer.

De manière avantageuse, le procédé comprend par ailleurs une étape d'agencement des tronçons de l'itinéraire de façon à procurer à la représentation schématique de l'itinéraire une orientation sensiblement selon un axe d'orientation.

Dans une autre possibilité la distance à parcourir entre deux points d'instructions est intégrée schématiquement le long de l'axe d'orientation pour chaque portion d'itinéraire. L'axe d'orientation est représenté entre les deux côtés du support, ou encore sur un des côtés, à gauche ou à droit du support.

De manière avantageuse, le procédé comprend par ailleurs une étape de formatage de la représentation schématique dans laquelle une transformation permet de modifier au moins une des caractéristiques d'agencement d'au moins une partie des sections en fonction de la surface disponible pour la représentation schématique.

Les caractéristiques d'agencement des sections comprennent de préférence :
- les angles de positionnement des sections les uns par rapport aux autres ;
- les profils des sections ;
- les longueurs relatives des sections.

L'invention prévoit également un système de génération de cartes d'itinéraires pour la mise en oeuvre du procédé préalablement décrit, suivant la revendication 9 annéxée.

Selon un mode de réalisation avantageux, le système de génération de cartes d'itinéraires comprend par ailleurs un module d'analyse du support d'affichage de carte, pour déterminer la surface disponible pour afficher la carte d'itinéraire.

Selon encore un autre mode de réalisation avantageux, le système de génération de cartes d'itinéraires comprenant par ailleurs un module de transformation des sections, permettant de modifier des caractéristiques des sections en fonction du format d'affichage prévu.

Selon un mode de réalisation avantageux, le système de génération de cartes d'itinéraires comprend par ailleurs un module de détection de manoeuvre, pour détecter les manoeuvres à effectuer pour parcourir l'itinéraire.

### DESCRIPTION DES FIGURES

Tous les détails de réalisation sont donnés dans la description qui suit, complétée par les figures 1 à 9, présentées uniquement à des fins d'exemples non limitatifs, et dans lesquelles:
- la figure 1A est une représentation schématique d'un système de génération de carte d'itinéraire selon l'invention;
- la figure 1B est une représentation schématique d'un autre système de génération de carte d'itinéraire selon l'invention;
- les figures 2A et 2B sont des représentations schématiques du fonctionnement du système de génération de carte d'itinéraire présenté à la figure 1B ;
- la figure 3 est une autre représentation schématique d'un système de génération de carte d'itinéraire, montrant un environnement de travail délocalisé ;
- la figure 4 est un organigramme fonctionnel illustrant les principales étapes d'un procédé de génération de carte d'itinéraire selon l'invention ;
- les figures 5A, 5B et 5C sont des exemples de cartes d'itinéraire selon l'art antérieur ;
- la figure 6 présente un exemple de carte d'itinéraire générée à l'aide d'un procédé et d'un système de génération de carte d'itinéraire selon l'invention ;
- la figure 7 présente un autre exemple de carte d'itinéraire générée à l'aide d'un procédé et d'un système de génération de carte d'itinéraire selon l'invention ;
- la figure 8 présente un autre exemple de carte d'itinéraire générée à l'aide d'un procédé et d'un système de génération de carte d'itinéraire selon l'invention avec le sens de lecture des représentations schématiques du haut vers le bas du support ;
- la figure 9 présente un autre exemple de carte d'itinéraire générée à l'aide d'un procédé et d'un système de génération de carte d'itinéraire selon l'invention dans lequel le découpage des sections est basé sur l'importance du réseau routier emprunté.

### DESCRIPTION DETAILLEE DE L'INVENTION

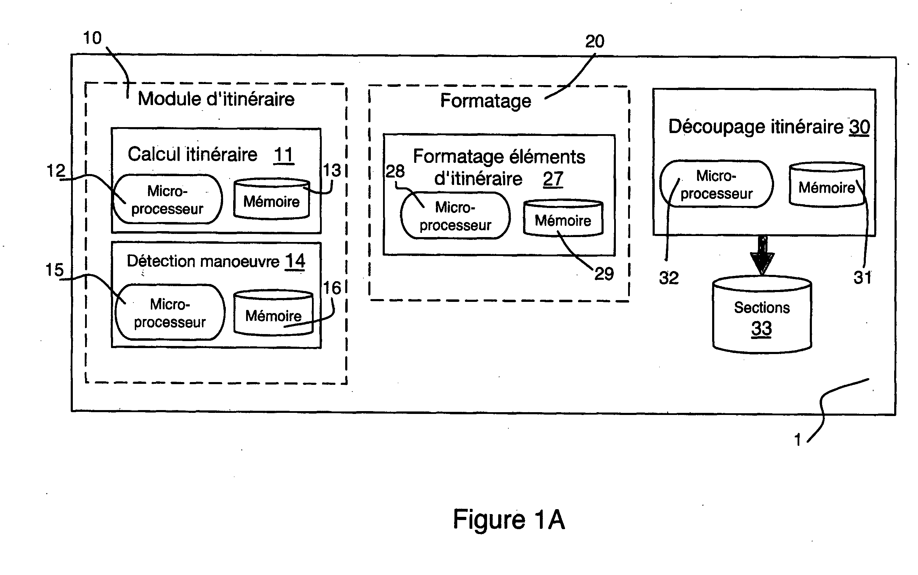

La figure 1A présente un exemple d'un mode de réalisation d'un système 1 de génération de carte d'itinéraire. On retrouve d'une part un module d'itinéraire 10, prévu pour générer toutes les données en relation avec l'itinéraire pour lequel une carte doit être produite. Le module d'itinéraire 10 comporte un module de calcul d'itinéraire 11, pourvus de moyens de calculs tel qu'un microprocesseur 12 et d'une mémoire de travail 13, un module de détection de manoeuvre 14, pourvus de moyens de calculs tel qu'un microprocesseur 15 et d'une mémoire de travail 16. Selon diverses variantes de réalisation, les moyens de calcul 12 et 15, tout comme les mémoires de travail 13 et 16 peuvent être centralisés pour tous les modules ou tout le système de génération de carte d'itinéraire, ou encore être agencés de façon externe, avec connexion aux différents modules.

Le module de calcul d'itinéraire 11 fonctionne de façon connue en soit, à l'aide d'un algorithme de détermination du plus court chemin entre deux points, tel que Dijkstra ou autre. Un tel algorithme permet, à l'aide d'un microprocesseur et des instructions requises, d'effectuer l'exploration d'un très grand nombre de possibilités, (de quelques dizaines ou centaines pour des zones à faibles densité et/ou pour des itinéraires courts à quelques centaines de milliers, voire plus, pour des zones à forte densité de routes et/ou pour des itinéraires longs) dans le but d'élire un itinéraire optimal en fonction de critères donnés, tels que l'itinéraire le plus court, ou le plus rapide, etc.

Une fois l'itinéraire connu, un module de détection de manoeuvre 14 permet de détecter les manoeuvres à effectuer le long de l'itinéraire en question. Par manoeuvre, on entend principalement un action de conduite d'un véhicule permettant de sélectionner un tronçon donné lorsque le conducteur se trouve face à une possibilité d'engager son véhicule vers une pluralité de tronçons (au moins deux). Le conducteur se trouve face à de multiples possibilités de poursuivre sa route, et une manoeuvre lui permet d'engager son véhicule en fonction de la direction prévue par l'itinéraire préétabli. Ainsi, le module 14 effectue un parcours virtuel de l'itinéraire établi par le module 11, et identifie les points ou noeuds où des tronçons multiples sont rattachés. Il peut s'agir d'intersection de routes, de sorties ou d'entrée sur autoroutes, et bifurcations, etc. Les manoeuvres sont déterminées de façon connues en soit. Pour un rond-point, il est entendu qu'une pluralité de manoeuvres simples sont en général impliquées, depuis l'entrée sur le rond-point, puis au passage de chaque sortie, impliquant à chaque fois une manoeuvre consistant soit à rester dans le rond-point où à en sortir, jusqu'à la sortie effective du rond-point. Dans le présent document, les ronds-points sont considérés comme une seule manoeuvre, du type « prendre la 3^{e} sortie », consistant en fait à une manoeuvre complexe, tel qu'évoqué précédemment.

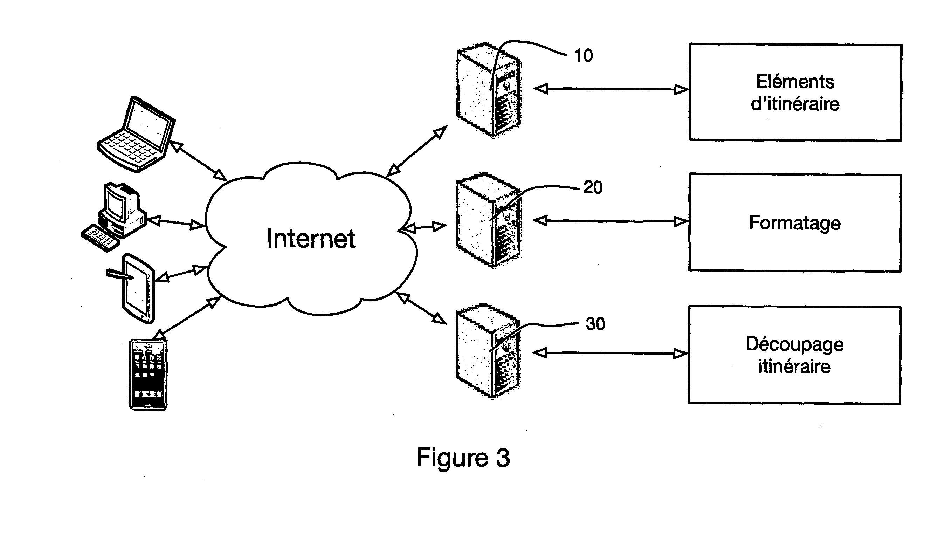

Le module 10 d'itinéraire peut être prévu de façon externe au système 1 de génération de carte d'itinéraire, soit à proximité de ce dernier, avec connexion directe, soit à distance de ce dernier, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module d'itinéraire 10 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

Selon d'autres variantes de réalisation, le module de calcul d'itinéraire 11, et/ou le module de détection de manoeuvre 14 sont séparés ou à distance, et reliés par des moyens de communications ou de connexion usuels, tel qu'évoqués précédemment. Selon encore une autre variante, les modules de calcul d'itinéraire 11, le module de détection de manoeuvre 14, peuvent aussi être combinés en un seul ou deux modules.

Le bloc de formatage 20 comporte un module de formatage d'éléments d'itinéraire 27, pourvu de moyens de calculs tel qu'un microprocesseur 28 et d'une mémoire de travail 29. Le module de formatage d'éléments d'itinéraires 27 effectue le formatage des éléments d'itinéraires, dans un format adapté au support utilisé.

Le module 20 de formatage peut être prévu de façon externe au système 1 de génération de carte d'itinéraire, soit à proximité l'un de ce dernier, avec connexion directe, soit à distance de ce dernier, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module de formatage 20 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

Un module de découpage d'itinéraire 30 effectue une séparation de l'itinéraire à afficher en une pluralité de sections 510. Le mode et les critères de séparation sont présentés plus en détails plus loin dans ce document. Les sections générées sont stockées dans une mémoire ou unité de stockage de sections 33.

Le module 30 de découpage d'itinéraire peut être prévu de façon externe au système 1 de génération de carte d'itinéraire, soit à proximité l'un de ce dernier, avec connexion directe, soit à distance de ce dernier, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module de découpage d'itinéraire 30 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

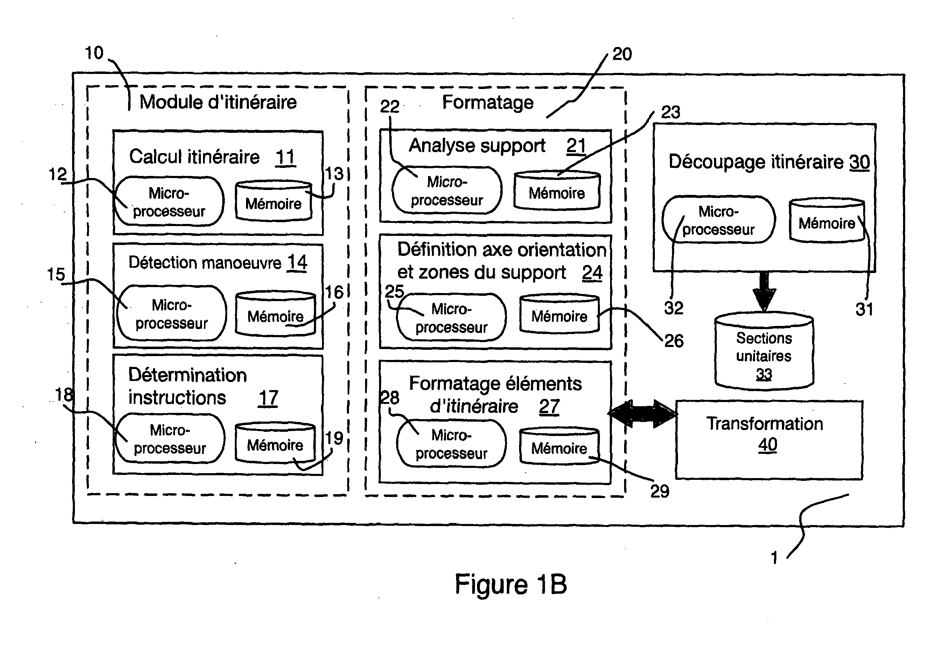

La figure 1B présente une variante plus complète du mode de réalisation du système de génération de carte d'itinéraire préalablement décrit en relation avec la figure 1A.

On retrouve d'une part un module d'itinéraire 10, prévu pour générer toutes les données en relation avec l'itinéraire pour lequel une carte doit être produite. Le module d'itinéraire 10 comporte un module de calcul d'itinéraire 11, pourvus de moyens de calculs tel qu'un microprocesseur 12 et d'une mémoire de travail 13, un module de détection de manoeuvre 14, pourvus de moyens de calculs tel qu'un microprocesseur 15 et d'une mémoire de travail 16, et d'un module de détermination d'instruction 17, pourvus de moyens de calculs tel qu'un microprocesseur 18 et d'une mémoire de travail 19. Selon diverses variantes de réalisation, les moyens de calcul 12, 15 et 18, tout comme les mémoires de travail 13, 16 et 19 peuvent être centralisés pour tous les modules ou tout le système de génération de carte d'itinéraire, ou encore être agencés de façon externe, avec connexion aux différents modules.

Le module de calcul d'itinéraire 11 fonctionne de façon connue en soit, à l'aide d'un algorithme de détermination du plus court chemin entre deux points, tel que Dijkstra ou autre.

Une fois l'itinéraire connu, un module de détection de manoeuvre 14 permet de détecter les manoeuvres à effectuer le long de l'itinéraire en question. tel qu'évoqué précédemment.

Le module 17 de détermination d'instructions effectue les associations de données entre les manoeuvres d'une part, détectées par le module de détection de manoeuvre 14, et les données routières de l'itinéraires, de façon à définir des instructions sous forme de données écrites, permettant au conducteur de prendre connaissance des données usuelles telles que les noms ou numéros de route, les directions à suivre, les repères, les distances à parcourir, et des données relatives aux manoeuvres à effectuer, tel que tourner à gauche ou à droite, prendre la Xe sortie, continuer tout droit, etc.

Grâce aux modules de détection de manoeuvre 14 et de détermination d'instructions 17, on peut obtenir des couples de données, ou données appariées, avec d'une part, des données relatives à une manoeuvre à afficher sous forme d'un schémas, et d'autre part des données relatives aux instructions écrites permettant d'effectuer la manoeuvre correspondante.

Le module 10 d'itinéraire peut être prévu de façon externe au système 1 de génération de carte d'itinéraire, soit à proximité de ce dernier, avec connexion directe, soit à distance de ce dernier, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module d'itinéraire 10 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

Selon d'autres variantes de réalisation, le module de calcul d'itinéraire 11, et/ou le module de détection de manoeuvre 14 et/ou le module de détermination d'instructions 17 sont séparés ou à distance, et reliés par des moyens de communications ou de connexion usuels, tel qu'évoqués précédemment. Selon encore une autre variante, les modules de calcul d'itinéraire 11, le module de détection de manoeuvre 14, et le module de détermination d'instructions 17 peuvent aussi être combinés en un seul ou deux modules.

Le bloc de formatage 20 comporte un module d'analyse de support 21, pourvu de moyens de calculs tel qu'un microprocesseur 22 et d'une mémoire de travail 23, un module de définition d'axe d'orientation et de zones support 24, pourvu de moyens de calculs tel qu'un microprocesseur 25 et d'une mémoire de travail 26, et d'un module de formatage d'éléments d'itinéraire 27, pourvu de moyens de calculs tel qu'un microprocesseur 28 et d'une mémoire de travail 29. Selon diverses variantes de réalisation, les moyens de calcul 22, 25 et 28, tout comme les mémoires de travail 23, 26 et 29 peuvent être centralisés pour tous les modules ou tout le système de génération de carte d'itinéraire, ou encore être agencés de façon externe, avec connexion aux différents modules.

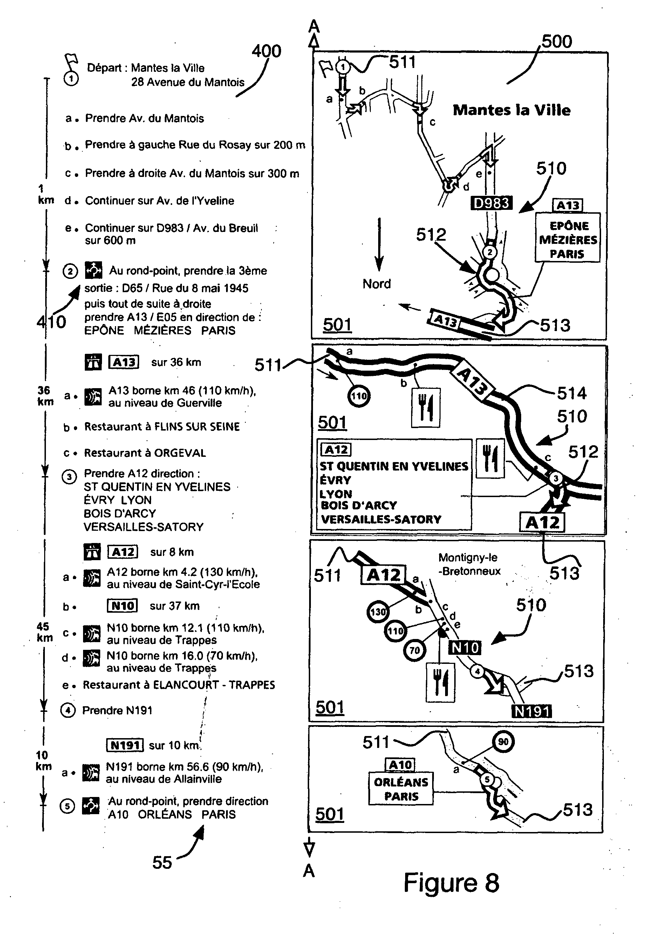

Le module d'analyse de support 21 détecte le type et les caractéristiques d'affichage du support prévu pour affichage de la carte d'itinéraire, afin que le format de la carte d'itinéraire puisse être adapté. En fonction des données recueillies par le module d'analyse de support 21, le module de définition d'axe d'orientation et de zones du support 24 définit tout d'abord un axe d'orientation A-A (figure 8), servant à définir une direction préférentielle d'orientation sur le support, selon laquelle les différentes manoeuvres de l'itinéraire seront agencées ou alignées. L'axe d'orientation permet de séparer deux zones 400 et 500 disposées côte à côte l'une de l'autre. Ces deux zones sont prévues pour contenir les éléments d'itinéraires appariés: d'un côté 400, les instructions écrites, et de l'autre 500, les manoeuvres correspondantes. Le module de formatage d'éléments d'itinéraires 27 effectue le formatage des éléments d'itinéraires appariés, dans un format adapté au support utilisé et en fonction de l'axe d'orientation défini.

Le module 20 de formatage peut être prévu de façon externe au système 1 de génération de carte d'itinéraire, soit à proximité de ce dernier, avec connexion directe, soit à distance de ce dernier, avec les moyens de connexion de type connus tels que Wifi, Wimax, par un réseau, tel qu'internet ou un réseau de téléphonie cellulaire, etc. Selon une autre variante de réalisation, tel que montré à la figure 3, un module de formatage 20 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

Un module de découpage d'itinéraire 30 effectue une séparation de l'itinéraire à afficher en une pluralité de sections 510 unitaires. Le mode et les critères de séparation sont présentés plus en détails plus loin dans ce document. Les sections unitaires générées sont stockées dans une mémoire ou unité de stockage de sections unitaires 33.

Le module 30 de découpage d'itinéraire peut être prévu de façon externe au système 1 de génération de carte d'itinéraire, soit à proximité de ce dernier, avec connexion directe, soit à distance de ce dernier, avec les moyens de connexion de type connus tels que Wifi, Wimax, par un réseau, tel qu'internet ou un réseau de téléphonie cellulaire, etc. Selon une autre variante de réalisation, tel que montré à la figure 3, un module de découpage d'itinéraire 30 peut être commun à une pluralité d'utilisateurs utilisant des dispositifs d'affichage à distance, de type portable, comme des téléphones dit « Smartphones », PDA, dispositifs de guidage de type GPS ou autre, ordinateurs portables ou de type tablette, etc, ou fixe, tel qu'un ordinateur de bureau.

Un module de transformation des tronçons 40, permettant de modifier certaines des caractéristiques des tronçons en fonction du format d'affichage, est également prévu. Tel que décrit plus loin, ce module permet d'adapter diverses caractéristiques des tronçons, tels que la forme, la longueur, l'angle, etc, par rapport aux éléments adjacents, pour permettre de réduire la surface requise pour disposer la représentation schématique de la manoeuvre à effectuer de façon compacte, sans perte des données informatives requises pour assurer le suivi de l'itinéraire. Le fait que la manoeuvre affichée soit extraite de la carte routière, et que seulement quelques tronçons soient présentés plutôt qu'une carte classique, permet d'effectuer des adaptations des formes sans affecter l'agencement général de la carte et sa lisibilité. Le module de transformation 40 des tronçons est avantageusement intégré ou relié au module de formatage d'éléments d'itinéraires 27.

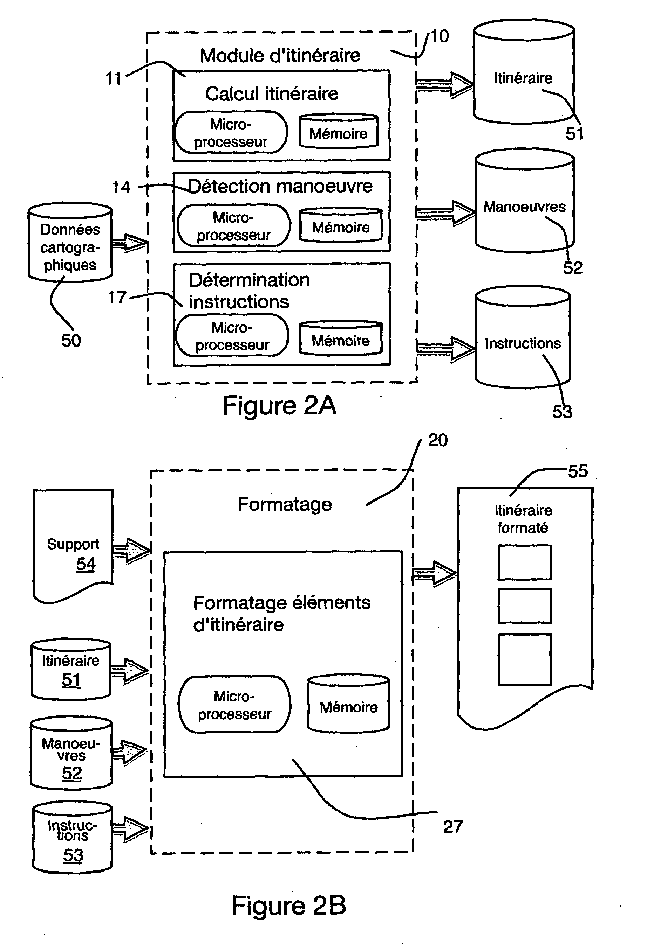

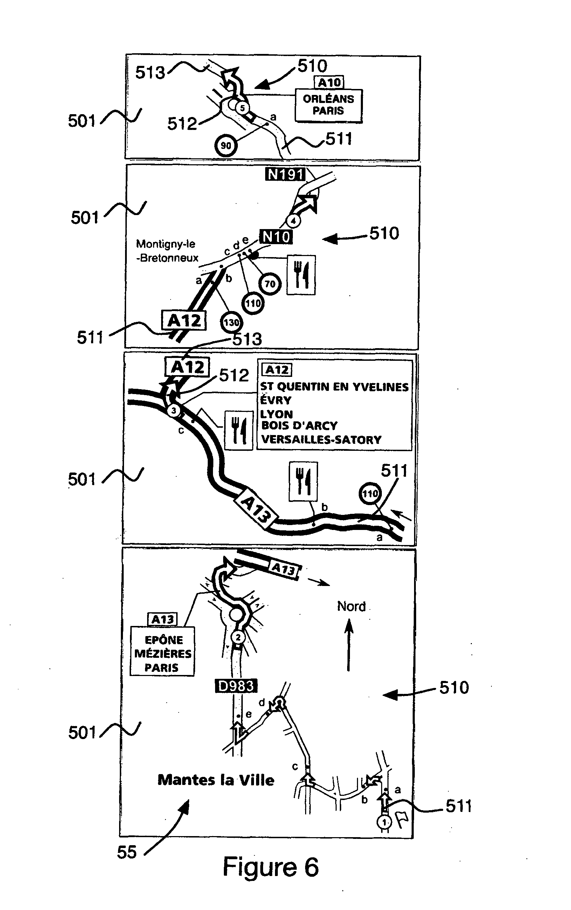

Les figures 2A et 2B illustrent de façon schématique les principales fonctions du module d'itinéraire 10 et du bloc de formatage 20. A la figure 2A, on remarque que les données cartographiques brutes 50 sont traitées par le module d'itinéraire 10 pour obtenir les données de l'itinéraire 51 à effectuer, les données des manoeuvres 52 correspondantes, et, selon le cas, les données des instructions 53 associées à ces manoeuvres. A la figure 2B, on observe le bloc de formatage 20 qui, à partir des données 54 du support, de l'itinéraire 51, des manoeuvres 52 et éventuellement des instructions 53, permet d'obtenir un itinéraire formaté 55 , tel que présenté plus en détails en relation avec les figures 6 à 9.

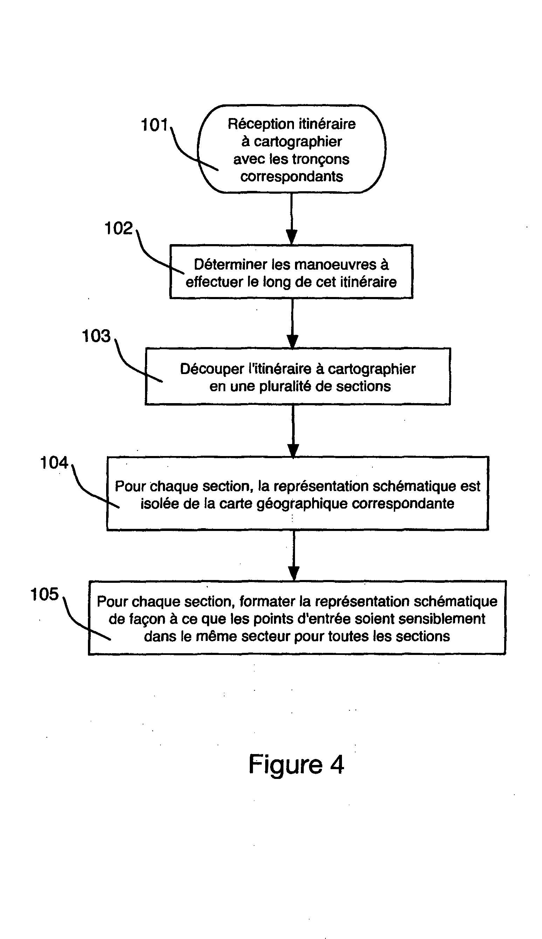

La figure 4 présente, de façon successive, les principales étapes du procédé selon l'invention. D'une part, aux étapes 101 et 102, les données en relation avec l'itinéraire 51 sont calculées.

De façon plus détaillée, à l'étape 101, après réception par un module de calcul d'itinéraire 11 des données cartographiques digitales des tronçons et des noeuds permettant de reconstituer une représentation de l'itinéraire calculé, les manoeuvres à effectuer le long de l'itinéraire sont déterminées à l'étape 102 par un module de détermination de manoeuvre 14.

Les données en relation avec le meilleur chemin à parcourir pour constituer l'itinéraire entre les points de départ et d'arrivée peuvent être calculées préalablement à l'étape 101 par le module d'itinéraire 10 ou par tout autre dispositif ou système de détermination d'itinéraire. Selon une variante de réalisation, elles peuvent être calculées par le module d'itinéraire 10 lors de l'étape 101.

Il en est de même pour les données relatives aux manoeuvres 52 qui peuvent être obtenues préalablement à la mise en oeuvre du procédé, ou au cours des premières étapes de celui-ci.

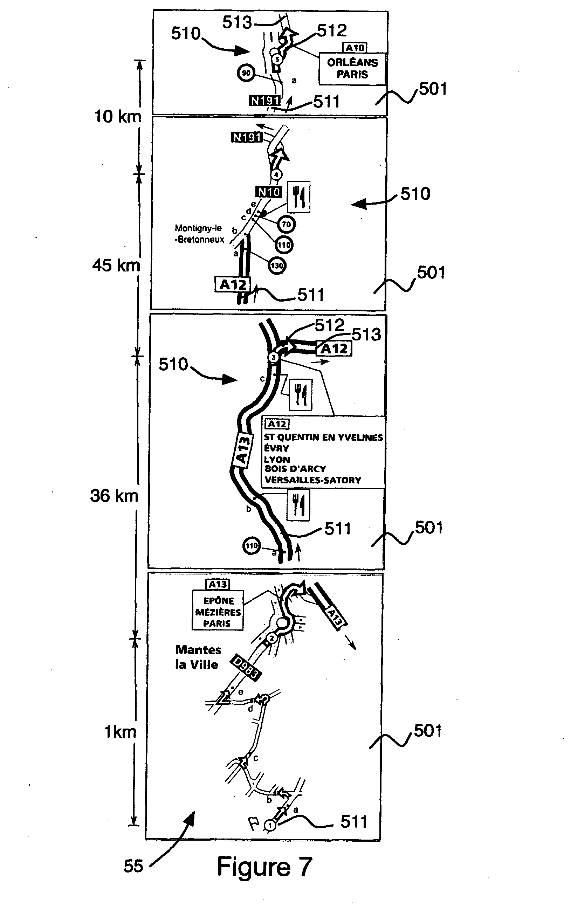

A l'étape 103, l'itinéraire à cartographier est découpé en une pluralité de sections, par un module de découpage 30, puis stockées dans une mémoire 33 de sections découpées. Dans un mode de réalisation avantageux, le découpage est effectué de sorte que chaque section unitaire 510 comporte au moins un point d'entrée 511, suivi d'un noeud 512 correspondant à une manoeuvre à effectuer, et un point de sortie 513, comme on le voit aux figures 7 et 8.

A l'étape 104, la représentation schématique est extraite de l'itinéraire global à effectuer. L'extraction consiste à conserver au minimum les tronçons identifiés pour la réalisation de l'itinéraire. Les autres tronçons de la carte routière, le fond cartographique, les autres données ainsi que le format de la carte routière ne sont de préférence pas représentés. Le fait de n'utiliser que les tronçons directement utiles plutôt qu'une représentation cartographique détaillée classique sur laquelle l'itinéraire est surligné confère une très grande souplesse pour configurer et formater la manoeuvre à afficher. En effet, il est possible de raccourcir un ou plusieurs tronçons, sans modifier la longueur d'autres tronçons voisins ou adjacents. Les changements de longueur peuvent être effectués sans tenir compte de contraintes d'échelles, de sorte que certains tronçons sont raccourcis plus ou moins que d'autres, tandis que d'autres tronçons peuvent même être allongés. Les modifications peuvent aussi impliquer des changements d'angles de certains tronçons, et même des changements de formes. Le fait que l'itinéraire soit isolé de la carte routière correspondante libère de la contrainte du respect des formes, des angles et des dimensions des tronçons. L'unique contrainte est l'itinéraire lui-même. Cela signifie qu'il est préférable de ne pas induire de croisements qui n'existent pas, et de ne pas supprimer les croisements locaux perceptibles sur le terrain.

Dans une variante de réalisation, le représentation schématique de la manoeuvre comporte en plus d'autres tronçons, par exemple des tronçons directement connectés à ceux de l'itinéraire prévu, ou des tronçons importants, susceptibles de servir de repères ou références pour faciliter le suivi de l'itinéraire. On représente aussi avantageusement les tronçons où des manoeuvres à venir sont prévues. Par ailleurs, pour faciliter le suivi de l'itinéraire, les sections peuvent comporter une portion d'itinéraire sans manoeuvre à effectuer 514 (figure 8), en aval et/ou en amont de la portion d'itinéraire de la manoeuvre elle-même. Ces portions sans manoeuvre peuvent être représentées jusqu'à la manoeuvre suivante.

Dans certains cas, comme par exemple pour des représentations à sensiblement grande échelle pour des zones résidentielles, des zones de rues sans nom ou avec des noms peu visibles depuis la route lorsque le véhicule effectuant l'itinéraire se déplace, une pluralité de sections unitaires sont combinées pour représentation sur un schéma unique. Ceci permet d'éviter de multiplier le nombre de schémas de manoeuvres. Par ailleurs, ce type de regroupement correspond souvent à des instructions écrites succinctes en série, du type « tourner à gauche sur la rue XXX, puis à droite sur la rue YYYY », etc. La figure 8, décrite en détails plus loin, présente un exemple d'une telle combinaison.

A l'étape 105, les représentations schématiques sont formatées de façon à ce que les points d'entrée soient sensiblement dans le même secteur pour toutes les sections.

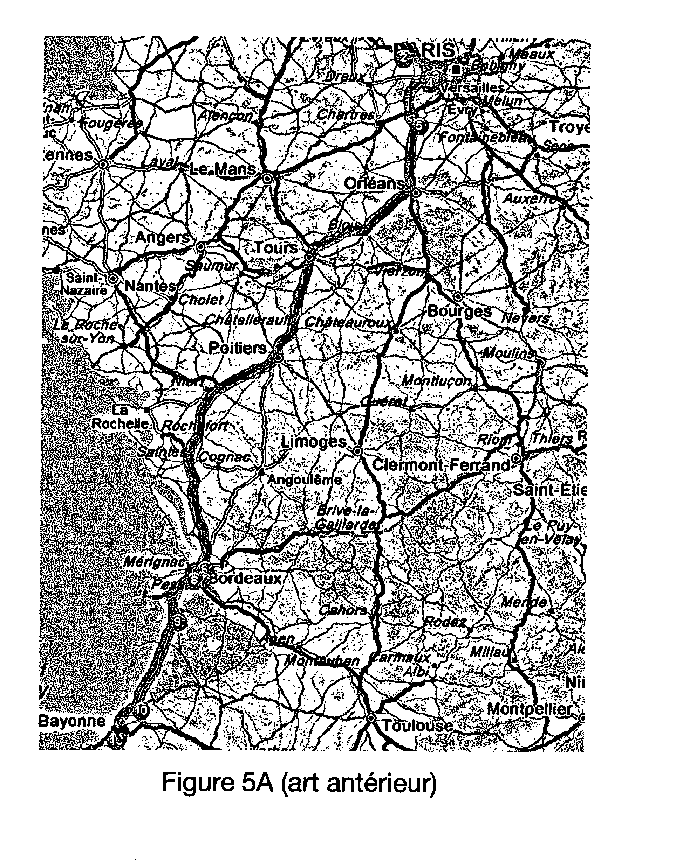

La figure 5A montre un exemple d'une carte d'itinéraire selon les techniques de calcul et d'affichage connues. On observe que l'itinéraire à parcourir est indiqué par un trait particulier appliqué sur la route de l'itinéraire. Ce trait est appliqué sur une carte routière classique, comportant tous les détails usuels tels que les noms de lieu, et parfois les numéros des routes principales. Une telle carte requiert en général une importante capacité mémoire et présente une ergonomie restreinte. Il est en effet souvent difficile de distinguer clairement le parcours choisi du reste des données affichées. Par ailleurs, du fait de l'utilisation d'une carte en format standardisé, il n'est pas possible d'effectuer des modifications de formes sans affecter les noeuds et tronçons se trouvant dans la zone environnante.

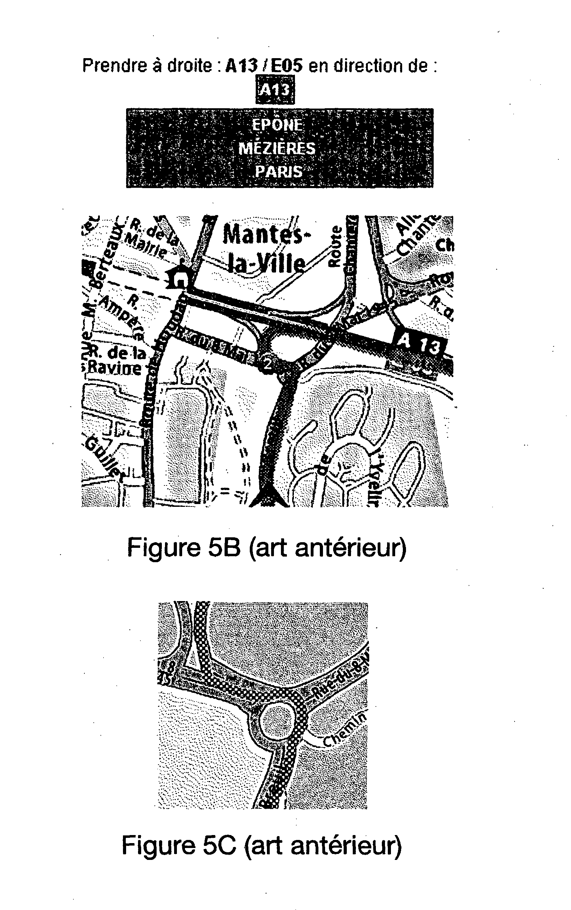

La figure 5B montre un exemple selon la technique antérieure d'affichage d'une manoeuvre avec les données textuelles correspondantes. Ici encore, l'utilisation nécessaire de l'ensemble de ce type de cartes détaillées implique la mise à disposition d'une importante capacité mémoire.

La figure 5C illustre un exemple d'affichage détaillé selon la technique antérieure d'une manoeuvre, par grossissement de la zone où la manoeuvre à effectuer se trouve.

La figure 6 présente un premier exemple de formatage obtenu grâce au procédé préalablement décrit. On y aperçoit un exemple de carte d'itinéraire 55 générée à l'aide du procédé et du système de génération de carte d'itinéraire selon l'invention. Pour chaque représentation schématique 501, le point d'entrée 511 se situe sensiblement dans le même secteur, dans cet exemple, la zone inférieure.

A la figure 7, pour chaque représentation schématique 501, le point d'entrée 511 se situe sensiblement dans le même secteur, dans cet exemple, la zone médiane inférieure. Le point de sortie 513 se situe aussi avantageusement dans le même secteur, dans cet exemple, le coin opposé, soit la zone médiane supérieure. Une telle configuration schématique standardisée permet d'améliorer l'ergonomie et facilite la lecture et la compréhension des manoeuvres à effectuer pour suivre l'itinéraire sans faille.

Dans ces deux exemples (figures 6 et 7), le découpage des sections est basé sur les manoeuvres à effectuer. Ce découpage par manoeuvre permet de générer des sections unitaires, comprenant de préférence une manoeuvre par section, sauf pour quelques cas d'exception, comme par exemple les ronds-points et les zones urbaines. Une section unitaire 510 comporte un point d'entrée 511, un noeud 512 correspondant à une manoeuvre à effectuer, et un point de sortie 513. Pour les ronds-points, ou pour certains carrefours, un noeud peut être complexe, c'est à dire comporter des possibilités multiples d'engagement sur différents tronçons.

Tel qu'évoqué précédemment, l'exemple de la figure 7 illustre comment des manoeuvres simples peuvent être combinées sur une même représentation schématique. Dans cet exemple, la première représentation schématique concerne un parcours d'à peine un km, tel que montré sur la portion gauche de la figure, à l'aide des flèches. S'agissant de manoeuvres simples, s'enchaînant sensiblement rapidement, un regroupement de ces manoeuvres permet de simplifier la représentation schématique et surtout d'éviter de multiplier les schémas pour un même secteur de parcours.

Dans l'exemple illustré à la figure 7 le sens de lecture est prévu de bas en haut du support, de façon à correspondre à une représentation de l'itinéraire avec la route devant le véhicule. Une telle représentation est très réaliste et instinctive et donc facile à interpréter, même avec un minimum de données. Par ailleurs, un tel type d'agencement correspond à un mode de plus en plus répandu, à savoir la représentation cartographique utilisée pour les dispositifs de guidage mobile de type GPS.

Dans la variante présentée à la figure 8, le support est divisé en deux sections ou zones, soit une section 400 pour les instructions écrites 410, et une section 500 pour les représentations schématiques 501. Les deux zones sont séparées par l'axe d'orientation du support A-A. Les instructions écrites 410 sont de préférence disposées de façon sensiblement alignée par rapport aux représentations schématiques correspondantes. Egalement dans cette figure, les représentations schématiques 501 comportent des directions de circulation du véhicule dans le même sens que le sens de lecture des données d'instructions 410, soit du haut vers le bas. Enfin, dans cet exemple, le point d'entrée 511 se situe sensiblement dans le même secteur pour chaque section, dans cet exemple, le coin supérieur gauche.

La figure illustre aussi le non respect des échelles cartographique, d'un schéma à l'autre. Ainsi, sur des hauteurs de support sensiblement comparables, on montre dans un premier temps un parcours de un km, puis dans un second temps de 36 km, puis de 45 km. Cet exemple vise à fournir les éléments essentiels au conducteur pour effectuer l'itinéraire, sans pollution par des données non requises pour suivre le parcours.

Dans les exemples des figures 7 et 8, les distances entre les manoeuvres sont indiquées à l'aide de flèches en liaison avec les représentations schématiques 501. Ces distances sont indiquées par des flèches comportant des indications du nombre de km à parcourir entre deux manoeuvres. Egalement dans l'exemple de la figure 8, en plus des instructions écrites correspondant aux manoeuvres, quelques données informatives, comme par exemple des données touristiques, les emplacements de certains radars, les postes d'essence, etc, peuvent aussi être prévues, à des fins de commodité pour le conducteur et/ou pour les passagers.

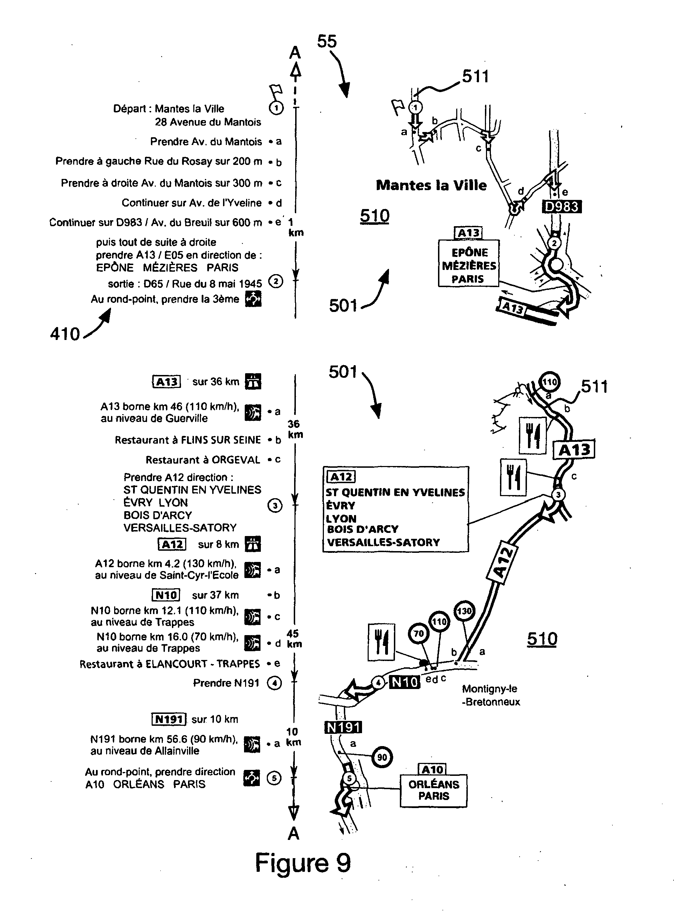

La figure 9 illustre un autre exemple dans lequel le découpage a été effectué en fonction de zones dans lesquelles l'itinéraire se déroule. Dans ce cas, une première zone, sensiblement urbaine (Mantes la Ville) a permis de délimiter une première section 510, et une seconde zone, sensiblement interurbaine (via l'autoroute A12 et A13, les nationales N10 et N19), a permis de délimiter une section 510 correspondante. On observe que dans cette dernière section, le niveau d'importance des routes utilisées est en général plus élevé que celui de la section urbaine. Le niveau d'importance des routes à emprunter peut donc également servir de critère de découpage pour établir des sections sensiblement uniformes, facilitant la lecture et la compréhension de l'itinéraire.

Les Figures et leurs descriptions faites ci-dessus illustrent l'invention plutôt qu'elles ne la limitent. L'étendue de la protection recherchée est définie dans les revendications annéxées. En particulier, l'invention et ses différentes variantes viennent d'être décrites en relation avec des exemples particuliers de découpage basés sur des manoeuvres et sur des niveaux d'importance des routes empruntées.

Néanmoins, il est évident pour un homme du métier que l'invention peut être étendue à d'autres modes de réalisation dans lesquels en variantes, on prévoit un découpage en fonction d'autres types de critères, comme par exemple en fonction de zones géographiques et/ou administratives, etc,.

Les signes de références dans les revendications n'ont aucun caractère limitatif. Les verbes « comprendre » et « comporter » n'excluent pas la présence d'autres éléments que ceux listés dans les revendications. Le mot « n » précédant un élément n'exclue pas la présence d'une pluralité de tels éléments.

## Revendications

1. Procédé de génération automatique de cartes d'itinéraires pour système de génération de cartes d'itinéraires ayant un accès à des données de cartographie routière digitales en relation avec au moins une zone géographique donnée et permettant de déterminer une pluralité de cartes d'itinéraires dans cette zone, comportant les étapes consistant à :
• recevoir un itinéraire à cartographier (101) ;
• effectuer un formatage des données de l'itinéraire pour un agencement sur un support comportant l'etape consistant à :
• à l'aide d'un module de découpage d'itinéraire (30), découper l'itinéraire (103) à cartographier en une pluralité de sections (510), chaque section comportant au moins un point d'entrée (103); **caractérisé en ce que** le formatage des données de l'itinéraire comprend en outre les étapes consistant à :
• pour chaque section (510), formater, à l'aide d'un module de formatage d'éléments d'itinéraires (27), une représentation schématique (501) correspondante de la section d'itinéraire (510), de façon isolée de la carte géographique correspondante (104) ;
• formater les représentations schématiques (501) de façon à ce que le point d'entrée (511) de chaque section (510) soit sensiblement dans le même secteur de la représentation schématique (501) correspondante.

2. Procédé de génération automatique de cartes d'itinéraires selon la revendication 1, dans lequel le secteur est un secteur angulaire.

3. Procédé de génération automatique de cartes d'itinéraires selon la revendication 1, dans lequel le secteur est un des côtés de la représentation schematique (501).

4. Procédé de génération automatique de cartes d'itinéraires selon la revendication 1, dans lequel les sections (510) sont des sections unitaires (300), chaque section unitaire comportant un point d'entrée (511) suivi d'un noeud correspondant à une manoeuvre (512) à effectuer et un point de sortie (513).

5. Procédé de génération automatique de cartes d'itinéraires selon l'une quelconque des revendications 1 à 4, comprenant par ailleurs une étape consistant à détecter les manoeuvres permettant d'effectuer l'itinéraire (102).

6. Procédé de génération automatique de cartes d'itinéraires selon l'une quelconque des revendications précédentes, comprenant par ailleurs une étape de formatage de la représentation schématique dans laquelle une transformation permet de modifier au moins une des caractéristiques d'agencement d'au moins une partie des sections en fonction de la surface disponible pour les représentations schématiques.

7. Procédé de génération automatique de cartes d'itinéraires selon la revendication 6, dans lequel les caractéristiques d'agencement des sections comprennent :
- les angles de positionnement des sections les uns par rapport aux autres ;
- les profils des sections;
- les longueurs relatives des sections.

8. Procédé de génération automatique de cartes d'itinéraires selon l'une quelconque des revendications précédentes, comprenant par ailleurs une étape d'agencement des sections de l'itinéraire de façon à procurer à la représentation schématique de l'itinéraire une orientation sensiblement selon un axe d'orientation (A-A).

9. Système de génération de cartes d'itinéraires pour la mise en oeuvre du procédé selon l'une des revendications 1 à 8, comportant un accès à des données de cartographie routière (50) en relation avec au moins une zone géographique donnée et permettant de déterminer une pluralité de cartes d'itinéraires dans cette zone, au moins un microprocesseur et au moins une mémoire de travail, un module de calcul d'itinéraire (11), et comportant par ailleurs :
- un module de découpage d'itinéraire (30), pour découper l'itinéraire à cartographier en une pluralité de sections;
- un module de formatage d'éléments d'itinéraires (27), pour formater les représentations schématiques.

10. Système de génération de cartes d'itinéraires selon la revendication 9, comprenant par ailleurs un module d'analyse (21) du support d'affichage de carte, pour déterminer la surface disponible pour afficher la carte d'itinéraire.

11. Système de génération de cartes d'itinéraires selon l'une des revendications 9 ou 10. comprenant par ailleurs un module de transformation des sections (40), permettant de modifier des caractéristiques des sections en fonction du format d'affichage prévu.

12. Système de génération de cartes d'itinéraires selon l'une quelconque des revendications 9 à 11, comprenant par ailleurs un module de détection de manoeuvre (14), pour détecter les manoeuvres à effectuer pour parcourir l'itinéraire.

## Patentansprüche

1. Verfahren zur automatischen Erzeugung von Routenkarten für Systeme zur Erzeugung von Routenkarten, die einen Zugriff auf digitale Straßenkartendaten in Verbindung mit mindestens einer gegebenen geographischen Zone aufweisen und das Bestimmen von mehreren Routenkarten in dieser Zone ermöglichen, das die Schritte aufweist, die aus Folgendem bestehen:
• Empfangen einer zu kartographierenden Route (101) ;
• Durchführen einer Formatierung von Daten der Route für eine Anordnung auf einem Träger, das den Schritt aufweist, der aus Folgendem besteht:
• Schneiden der zu kartographierenden Route (103) in mehrere Abschnitte (510) mittels eines Routenschneidmoduls (30), wobei jeder Abschnitt mindestens einen Eingangspunkt (103) aufweist;
**dadurch gekennzeichnet, dass** die Formatierung der Daten der Route ferner die Schritte aufweist, die aus Folgendem bestehen:
• für jeden Abschnitt (510), Formatieren einer entsprechenden schematischen Darstellung (501) des Routenabschnitts (510) auf von der entsprechenden geographischen Karte (104) isolierte Weise mittels eines Moduls zur Formatierung von Routenelementen (27);
• Formatieren der schematischen Darstellungen (501) derart, dass der Eingangspunkt (511) von jedem Abschnitt (510) sich im Wesentlichen im selben Sektor der entsprechenden schematischen Darstellung (501) befindet.

2. Verfahren zur automatischen Erzeugung von Routenkarten nach Anspruch 1, wobei der Sektor ein Winkelsektor ist.

3. Verfahren zur automatischen Erzeugung von Routenkarten nach Anspruch 1, wobei der Sektor eine der Seiten der schematischen Darstellung (501) ist.

4. Verfahren zur automatischen Erzeugung von Routenkarten nach Anspruch 1, wobei die Abschnitte (510) Einheitsabschnitte (300) sind, wobei jeder Einheitsabschnitt einen Eingangspunkt (511), gefolgt von einem Knoten, der einem durchzuführenden Manöver (512) entspricht, und einen Ausgangspunkt (513) aufweist.

5. Verfahren zur automatischen Erzeugung von Routenkarten nach einem der Ansprüche 1 bis 4, das ferner einen Schritt aufweist, der darin besteht, die Manöver zu ermitteln, die die Zurücklegung der Route (102) ermöglichen.

6. Verfahren zur automatischen Erzeugung von Routenkarten nach einem der vorhergehenden Ansprüche, das ferner einen Schritt der Formatierung der schematischen Darstellung aufweist, in der eine Umwandlung das Ändern von mindestens einer der Anordnungseigenschaften von mindestens einem Teil der Abschnitte in Abhängigkeit von der für die schematischen Darstellungen verfügbaren Fläche ermöglicht.

7. Verfahren zur automatischen Erzeugung von Routenkarten nach Anspruch 6, wobei die Anordnungseigenschaften der Abschnitte Folgendes aufweisen:
- die Positionierungswinkel der Abschnitte in Bezug aufeinander;
- die Profile der Abschnitte;
- die entsprechenden Längen der Abschnitte.

8. Verfahren zur automatischen Erzeugung von Routenkarten nach einem der vorhergehenden Ansprüche, das ferner einen Schritt des Anordnens der Abschnitte der Route aufweist, derart, dass der schematischen Darstellung der Route eine Ausrichtung im Wesentlichen entlang einer Ausrichtungsachse (A-A) verliehen wird.

9. System zur Erzeugung von Routenkarten für den Einsatz des Verfahrens nach einem der Ansprüche 1 bis 8, das einen Zugriff auf Straßenkartendaten (50) in Verbindung mit mindestens einer gegebenen geographischen Zone aufweist und das Bestimmen mehrerer Routenkarten in dieser Zone ermöglicht, mindestens einen Mikroprozessor und mindestens einen Arbeitsspeicher, ein Routenberechnungsmodul (11) und außerdem Folgendes aufweist:
- ein Routenschneidmodul (30) zum Schneiden der zu kartographierenden Route in mehrere Abschnitte;
- ein Modul zur Formatierung von Routenelementen (27) zum Formatieren der schematischen Darstellungen.

10. System zur Erzeugung von Routenkarten nach Anspruch 9, das ferner ein Modul (21) zur Analyse des Trägers zur Anzeige der Karte aufweist, um die für die Anzeige der Routenkarte verfügbare Fläche zu bestimmen.

11. System zur Erzeugung von Routenkarten nach einem der Ansprüche 9 oder 10, das ferner ein Modul zur Umwandlung der Abschnitte (40) aufweist, das das Ändern der Eigenschaften der Abschnitte in Abhängigkeit vom vorgesehenen Anzeigeformat ermöglicht.

12. System zur Erzeugung von Routenkarten nach einem der Ansprüche 9 bis 11, das ferner ein Manöverermittlungsmodul (14) zum Ermitteln der zum Zurücklegen der Route durchzuführenden Manöver aufweist.

## Claims

1. Method for automatically generating maps of routes for system for generating maps of routes having access to digital road mapping data in conjunction with at least one given geographical zone and making it possible to determine a plurality of maps of routes in this zone, comprising the steps consisting in:
• receiving a route to be mapped (101);
• performing a formatting of the data of the route for an arrangement on a support comprising the step consisting in:
• with the aid of a route cutting module (30), cutting the route (103) to be mapped into a plurality of sections (510), each section comprising at least one entry point (103) **characterized in that** the formatting of the data of the route furthermore comprises the steps consisting in:
• for each section (510), formatting, with the aid of a module for formatting route elements (27), a corresponding schematic representation (501) of the route section (510), in a manner isolated from the corresponding geographical map (104);
• formatting schematic representations (501) in such a way that the entry point (511) of each section (510) is substantially in the same sector of the corresponding schematic representation (501).

2. Method for automatically generating maps of routes according to Claim 1, in which the sector is an angular sector.

3. Method for automatically generating maps of routes according to Claim 1, in which the sector is one of the sides of the schematic representation (501).

4. Method for automatically generating maps of routes according to Claim 1, in which the sections (510) are unitary sections (300), each unitary section comprising an entry point (511) followed by a node corresponding to a manoeuvre (512) to be performed and an exit point (513).

5. Method for automatically generating maps of routes according to any one of Claims 1 to 4, moreover comprising a step consisting in detecting the manoeuvres making it possible to perform the route (102) .

6. Method for automatically generating maps of routes according to any one of the preceding claims, moreover comprising a step of formatting the schematic representation in which a transformation makes it possible to modify at least one of the arrangement characteristics of at least part of the sections as a function of the surface area available for the schematic representations.

7. Method for automatically generating maps of routes according to Claim 6, in which the arrangement characteristics of the sections comprise:
- the angles of positioning of the sections with respect to one another;
- the profiles of the sections;
- the relative lengths of the sections.

8. Method for automatically generating maps of routes according to any one of the preceding claims, moreover comprising a step of arranging the sections of the route so as to afford the schematic representation of the route an orientation substantially along an orientation axis (A-A).

9. System for generating maps of routes for the implementation of the method according to one of Claims 1 to 8, comprising access to road mapping data (50) in conjunction with at least one given geographical zone and making it possible to determine a plurality of maps of routes in this zone, at least one microprocessor and at least one work memory, a route calculation module (11), and comprising moreover:
- a route cutting module (30), for cutting the route to be mapped into a plurality of sections;
- a module for formatting route elements (27), for formatting the schematic representations.

10. System for generating maps of routes according to Claim 9, moreover comprising an analysis module (21) for the map display support, for determining the surface area available to display the route map.

11. System for generating maps of routes according to one of Claims 9 or 10, moreover comprising a module for transforming the sections (40), making it possible to modify characteristics of the sections as a function of the display format envisaged.

12. System for generating maps of routes according to any one of Claims 9 to 11, moreover comprising a manoeuvre detection module (14), for detecting the manoeuvres to be performed so as to travel the route.
